# EUROPEAN PATENT SPECIFICATION

(11) **EP 1 560 699 B1**
(45) Date of publication and mention of the grant of the patent: **01.08.2007**
(21) Application number: 03775801.8
(22) Date of filing: 30.10.2003
(51) Int. Cl.: B29D 30/60, B29D 30/20

(54) **A METHOD AND AN APPARATUS FOR ASSEMBLING TYRES FOR VEHICLE WHEELS**
VERFAHREN UND VORRICHTUNG ZUM AUFBAUEN VON FAHRZEUGREIFEN
PROCEDE ET DISPOSITIF D'ASSEMBLAGE DE PNEUMATIQUES POUR ROUES DE VEHICULE

(30) Priority: 05.11.2002 WO PCT/IT02/00698
(43) Date of publication of application: 10.08.2005
(73) Proprietor: Pirelli Tyre S.p.A., 20126 Milano (IT)
(72) Inventor: LACAGNINA, Claudio, I-21052 Busto Arsizio (IT)
(74) Representative: Tansini, Elio Fabrizio
(86) International application number: PCT/IT2003/000669
(87) International publication number: WO 2004/041522

(56) References cited:
- EP-A- 1 106 335
- EP-A- 1 211 057
- WO-A-01/36185
- WO-A-98/58794
- WO-A-02/094545
- US-A1- 2002 153 083
- DATABASE WPI Week 7744 Derwent Publications Ltd., London, GB; AN 1977-78874y XP002272338 -& SU 273 922 A (TYRE IND EQUIP RES), 22 February 1977 (1977-02-22)

## Description

The present invention relates to a method of assembling tyres for vehicle wheels. The invention also pertains to an apparatus for assembling vehicle tyres, to be used for putting into practice the above mentioned assembling method.

A tyre for vehicle wheels generally comprises a carcass structure including at least one carcass ply having respectively opposite end flaps turned up loop-wise around annular anchoring structures, each of said anchoring structures being usually made up of a substantially circumferential annular insert onto which at least one filling insert is applied, at a radially external position thereof.

Associated with the carcass structure is a belt structure comprising one or more belt layers, arranged in radial superposed relationship with each other and with the carcass ply and having textile or metallic reinforcing cords of crossed orientation and/or disposed substantially parallel to the circumferential extension direction of the tyre. Applied to the belt structure at a radially external position thereof is a tread band, made of elastomer material like other semifinished products being constituent parts of the tyre.

To the aims of the present description it is to be pointed out that by the term "elastomer material" it is meant a rubber blend in its entirety, i.e. the compound made up of at least one base polymer suitably amalgamated with reinforcing fillers and/or process additives of various types.

In addition respective sidewalls of elastomer material are also applied to the side surfaces of the carcass structure, each of them extending from one of the side edges of the tread band until close to the respective annular anchoring structure at the beads, which sidewalls, depending on the different embodiments, can exhibit respective radially external end edges either superposed on the side edges of the tread band so as to form a design scheme of the type usually referred to as "overlying sidewalls", or interposed between the carcass structure and the side edges of the tread band itself, in accordance with a design scheme of the type referred to as "underlying sidewalls".

In most of the known processes for tyre manufacture, the carcass structure and belt structure together with the respective tread band are provided to be made separately of each other in respective work stations, to be mutually assembled at a later time.

More particularly, manufacture of the carcass structure first contemplates deposition of the carcass ply or plies on a first drum usually identified as "building drum" to form a cylindrical sleeve. The annular anchoring structures at the beads are fitted or formed on the opposite end flaps of the carcass ply or plies that in turn are turned up around the annular structures themselves so as to enclose them in a sort of loop.

Simultaneously, on a second drum or auxiliary drum, an outer sleeve is made which comprises the belt layers laid down in radially superposed relationship with each other, and the tread band applied to the belt layers at a radially external position thereof. The outer sleeve is then picked up from the auxiliary drum to be coupled with the carcass sleeve. For the purpose, the outer sleeve is disposed in coaxial relation around the carcass sleeve, afterwards the carcass ply or plies are shaped into a toroidal conformation by axially moving the beads close to each other and simultaneously admitting fluid under pressure into the carcass sleeve, so as to determine application of the belt band and the tread band to the carcass structure of the tyre at a radially external position thereof. Assembling of the carcass sleeve with the outer sleeve can be carried out on the same drum as used for building the carcass sleeve, in which case reference is made to a "unistage building process". A building process of this type is described in document US 3,990,931, for example.

Alternatively, assembling may be carried out on a so-called "shaping drum" onto which the carcass sleeve and outer sleeve are transferred, to build the tyre following a so-called "two-stage building process", as described in document EP 0 613 757, for example.

In conventional assembling methods the tread band is usually obtained from a continuously-extruded section member that, after being cooled for stabilisation of its geometrical conformation, is stored on suitable benches or reels. The semifinished product in the form of sections or of a continuous strip is then sent to a feeding unit carrying out either picking up of the sections or cutting of the continuous strip into sections of given length, each of them constituting the tread band to be circumferentially applied to the belt structure of a tyre being processed.

Known from document GB 1,048,241 is a machine for laying down a layer of elastomer material of varying thickness on a tyre carcass and comprising a feeding head to apply a ribbon of elastomer material to the carcass, means for setting the carcass in rotation around its axis for winding of a plurality of coils thereon when the carcass rotates with respect to the feeding head, means for moving the feeding head transversely of the carcass, from one side to the other of the circumferential median plane of the carcass, and means for automatically varying the transverse-movement amount for each winding revolution so as to vary the overlapping degree of the contiguous coils and consequently thickness of the layer formed on the carcass. In an appropriate version for making new tyres, during formation of the tread band the carcass is mounted on a building drum and has a cylindrical right conformation.

In document WO 01/36185, in the name of the same Applicant, a robotized arm bears a toroidal support on which each of the components of a tyre under production is directly made. The robotized arm gives the toroidal support a circumferential-distribution motion around its geometric axis, simultaneously with controlled transverse-distribution displacements in front of a delivery member supplying a narrow strip of elastomer material. The narrow strip therefore forms a plurality of coils the orientation and mutual-overlapping parameters of which are suitably managed so as to control the variations in thickness to be given to a component of a tyre being made, based on a predetermined deposition scheme preset on an electronic computer.

In the production contexts to which the present invention (contemplating production and storage of semifinished products and subsequent assembling of same on a building and/or shaping drum) is addressed, for manufacturing the tread bands and sidewalls, installation of extrusion lines is presently required that must necessarily have a high productivity, in order to offer appropriate responses in terms of economy on a large scale. As a result, an extrusion line is usually capable of supplying a plurality of assembling stations. In fact, productivity of the extrusion line is required to be adjusted in proportion to the productivity of the assembling stations the number of which has an influence on saturation and therefore productivity of the extrusion line.

In accordance with the present invention, the Applicant intends to overcome the strong constraints imposed by the above described circumstance, that particularly reveal themselves in the impossibility of the production plants being modified in response to sudden variations in the market demand in terms of productivity and product typology. In particular, since the plant productivity is greatly connected with the productivity of the tread band extrusion line, an increase in productivity would normally require installation of further tread band and/or sidewall extrusion lines, which would bring about an increase in the production capacity that at this point would be in excess with respect to the real market demand.

In addition, the Applicant has become aware of the fact that traditional methods tend to introduce structural unevennesses into the obtained tyres. In particular, it was found that a geometric evenness of the tread band and sidewalls is conditioned by a correct distribution of the strips of elastomer material applied to the carcass structure and/or belt structure, particularly at the end-to-end junctions of the extremities of each strip. A specifically critical aspect to the aims of the sidewall formation appears to be the important stretching in a circumferential direction to which the strips of elastomer material applied in accordance with the known art are necessarily submitted when the carcass structure is shaped into a toroidal conformation, starting from a substantially cylindrical conformation.

The Applicant has also become aware of the fact that, within the traditional methods of assembling tyres, the impossibility of indifferently putting into practice design schemes of the "overlying sidewall" type and of the "underlying sidewall" type without use of specific machinery being required for each design scheme, is essentially attributable to the adopted procedure in making the tread band and sidewalls.

The Applicant could further experience that also of difficult accomplishment is carrying out integration into the assembling plants, of equipment necessary to associate auxiliary reinforcing inserts with the carcass structure where required, in order to make tyres of the self-supporting type. Still in accordance with the present invention, the Applicant has understood that these limitations too can be surprisingly overcome by introducing into the assembling processes a different procedure for making the sidewalls and/or the tread band.

According to US 2002/0153083 A1, a ribbon cylinder obtained by spirally winding a ribbon-like rubber-coated cord on a drum, is helicoidally cut to obtain body ply materials and belt layer materials. Tread band is obtained by winding in layers a base tread and a cap tread supplied from a base tread and a cap tread stock reel, respectively, around the belts and the cap band on a forming drum. Sidewalls are obtained by winding side treads supplied from side tread stock reels around sides of the carcass ply.

According to EP 1 106 335, sidewalls are formed on a building drum, by spirally winding rubber strips supplied from respective injection units, while controlling the rotating speed of the building drum and the traversing speeds of the injections units. Next, assembling of a carcass structure is completed by applying an inner liner, a carcass ply and a pair of beads on the building drum. A tread band is formed by ) winding rubber strips supplied from an injection unit, around a belt structure placed on a forming drum, while controlling the rotating speed of the forming drum and the traversing speed of the injection unit. The belt structure is then coupled on the carcass structure.

According to EP 1 211 057, after the center portion of carcass band is deformed by expansion until it is brought against the inner face of a belt structure, an unvulcanized rubber strip is applied to the outer peripheral face of the belt structure by spirally winding thereupon, so that a tread band is formed. Before or after formation of the tread band, application of sidewall is achieved by spirally winding respective unvulcanized rubber strips to the carcass structure.>

In accordance with the present invention, in dealing with the above discussed problems, the Applicant has considered the possibility of achieving great improvements in terms of production flexibility and quality of the product by manufacturing the tread band and/or sidewalls in the present tyre building processes contemplating assembling of semifinished products, through winding up of a continuous strip-like element into coils disposed in side by side relationship directly on the belt structure.

In more detail, it is an object of the present invention to provide a method of assembling tyres for vehicle wheels comprising the steps of: assembling a carcass structure comprising at least one carcass ply in engagement with annular anchoring structures axially spaced apart from each other; disposing a belt structure comprising at least one belt layer, on an auxiliary drum; picking up the belt structure from the auxiliary drum to transfer it to a position coaxially centred with respect to the carcass structure; shaping the carcass structure according to a toroidal configuration for engagement of the belt structure with the carcass structure; applying a tread band to the belt structure ; applying a pair of sidewalls to the carcass structure on opposite sides thereof; wherein at least one of said steps of applying a tread band and applying a pair of sidewalls is carried out by winding up at least one continuous strip-like element of elastomer material in contiguous circumferential coils around a geometric axis of the carcass structure arranged on a primary drum (15),
wherein said steps of applying a tread band (5) and applying a pair of sidewalls (6), are cyclically carried out following a controlled rate on at least one first and one second primary drums (15), a step of arranging the carcass structure (3) on one of the primary drums (15) being carried out before completing assembling of a tyre on the other of the primary drums (15).

In accordance with a further inventive aspect, the above mentioned method can be carried out by means of an apparatus for assembling tyres for vehicle wheels comprising: at least one primary drum arranged to support a carcass structure comprising at least one carcass ply in engagement with anchoring structures axially spaced apart from each other; an auxiliary drum set to carry a belt structure; a transfer member to move the belt structure from the auxiliary drum to the carcass structure; a unit for application of a tread band to the belt structure; a unit for application of a pair of sidewalls against the opposite lateral walls of the carcass structure;
wherein at least one of said tread band and sidewall application unit comprises at least one delivery member to lay down at least one continuous strip-like element of elastomer material in contiguous circumferential coils around a geometric axis of the carcass structure, characterized in that further comprises at least one second primary drum (15), wherein said first and second primary drums are engaged by a first and a second actuating assemblies (21a, 21b) respectively, to be sequentially led to interact with said devices for application of the carcass structure (3), with the unit for application of the tread band (5) and the unit for application of the sidewalls (6).

Further features and advantages will become more apparent from the detailed description of a preferred, but not exclusive, embodiment of a method and an apparatus for assembling tyres for vehicle wheels, in accordance with the present invention.

This description will be set out hereinafter with reference to the accompanying drawings, given by way of non-limiting example, in which:
- Fig. 1 is a diagrammatic top view of an apparatus for assembling tyres in accordance with the present invention;
- Fig. 2 is an elevation view of a portion of the apparatus in Fig. 1;
- Fig. 3 is a diagrammatic top view of an apparatus for assembling tyres in accordance with a possible alternative embodiment of the present invention;
- Fig. 3a is a diagrammatic top view of an apparatus for assembling tyres in accordance with a further alternative embodiment of the present invention;
- Fig. 4 is a diagrammatic plan view of a further alternative embodiment of a plant in accordance with the present invention;
- Fig. 5 is a diagrammatic fragmentary cross-section view of a tyre obtainable in accordance with the present invention.

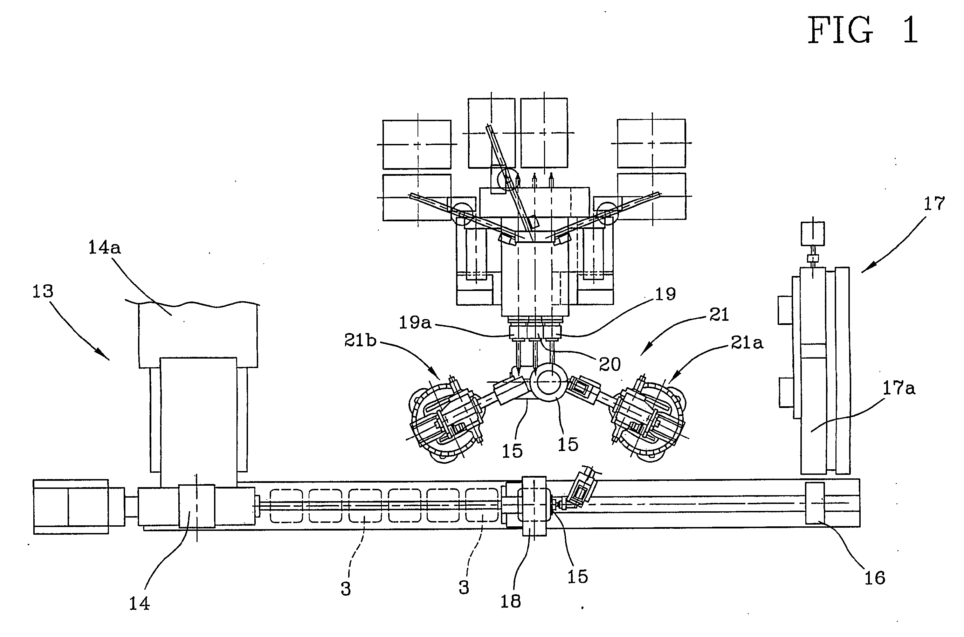

Referring particularly to Figs. 1 to 4, an apparatus for assembling tyres for vehicle wheels set to put into practice an assembling method in accordance with the present invention has been generally identified by reference numeral 1.

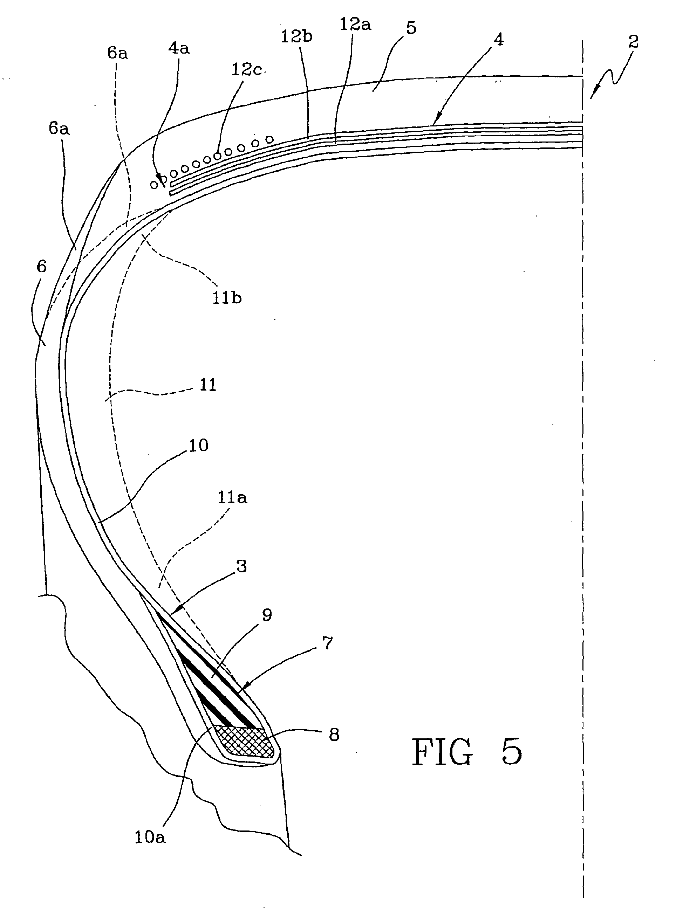

The invention aims at making tyres of the type generally identified with 2 in Fig. 5, essentially comprising a carcass structure 3 of substantially toroidal conformation, a belt structure 4 of substantially cylindrical conformation, circumferentially extending around the carcass structure 3, a tread band 5 applied to the belt structure 4 at a circumferentially external position thereof, and a pair of sidewalls 6 laterally applied, on opposite sides, to the carcass structure 3 and each extending from a side edge of the tread band until close to a radially internal edge of the carcass structure itself.

Each sidewall 6 may exhibit a radially external end tailpiece 6a at least partly covered with the extremity of the tread band 5, as shown in chain line in Fig. 5, following a design scheme of the type usually identified as "underlying sidewalls". Alternatively, the radially external end tailpieces 6a of sidewalls 6 can be laterally superposed on the corresponding extremities of the tread band 5, as shown in solid line in Fig. 5, to achieve a design scheme of the type usually identified as "overlying sidewalls".

The carcass structure 3 comprises a pair of annular anchoring structures 7 integrated into regions usually identified as "beads", each of them being for example made up of a substantially circumferential annular insert 8 usually called "bead core" and carrying an elastomer filler 9 at a radially external position thereof.

Turned up around each of the annular anchoring structures are the end flaps 10a of one or more carcass plies 10 comprising textile or metallic cords extending transversely of the circumferential extension of tyre 2, possibly following a predetermined inclination between the two annular anchoring structures 7.

In self-supporting tyres or tyres intended for particular uses, auxiliary reinforcing inserts may be further provided, of the type usually called "lunettes" for example, applied close to the sidewalls 6 internally of the carcass ply 10 or between two paired carcass plies. As shown in chain line at 11 in Fig. 5, these auxiliary elastic-support inserts each have a radially internal edge 11a disposed close to one of the annular anchoring structures 7 and a radially external edge 11b disposed close to a side edge 4a of the belt structure 4.

The belt structure 4 can in turn comprise one or more belt layers 12a, 12b including metallic or textile cords suitably inclined to the circumferential extension of the tyre, in respectively crossed orientations between one belt layer and the other, as well as a possible external belting layer 12c including one or more cords circumferentially wound into coils axially disposed in side by side relationship around the belt layers 12a, 12b. The sidewalls 6 and tread band 5 each essentially comprise at least one layer of elastomer material of suitable thickness. Also associated with the thread band 5 may be a so-called substrate (not shown), of elastomer material having appropriate composition and physico-chemical features and acting as an interface between the true tread band and the underlying belt structure 4.

The individual components of the carcass structure 3 and belt structure 4, such as in particular the annular anchoring structures 7, carcass plies 10, belt layers 12a, 12b and further possible reinforcing elements designed to constitute the outer belting layer 12c, are supplied to apparatus 1 in the form of semifinished products made during preceding manufacturing steps, to be suitably assembled with each other.

Apparatus 1 is provided with devices for application of the carcass structure 3 on a primary drum 15. These application devices preferably comprise a building station 13 not described in detail as obtainable in any convenient manner and having a building drum 14 on which the carcass ply or plies 10 are first wound up; said plies come from a feeding line 14a along which they are cut into sections of appropriate length correlated with the circumferential extension of the building drum 14, before being applied thereto to form a so-called substantially cylindrical "carcass sleeve".

Afterwards, the annular anchoring structures 7 are fitted onto the end flaps 10a of plies 10 to subsequently carry out turning-up of the end flaps themselves so as to cause engagement of the anchoring structures into the loops thus formed by the turned-up plies 10. If requested, the building station 13 may comprise devices for associating auxiliary reinforcing inserts with the carcass ply or plies 10, which inserts are applied during preliminary steps or steps alternated with the steps of laying down the ply or plies 10 and/or other components of the carcass structure 3. In particular, application of the above mentioned auxiliary reinforcing inserts or "lunettes" 11 may be provided directly on the building drum 14 before application of the carcass ply or plies 10, or on one of the carcass plies before application of an additional carcass ply 10.

When assembling of the components has been completed, transfer devices not shown pick up the carcass structure 3 from the building drum 14 to transfer it to the primary drum 15, of the type usually referred to as "shaping drum", for example.

Alternatively, assembling of the carcass structure 3 components may take place directly on the primary drum 15.

Simultaneously with assembling of the carcass structure 3 on the building drum 14 or directly on the primary drum 15, manufacture of the belt structure on an auxiliary drum 16 takes place. More particularly, to this aim the auxiliary drum 16 is provided to interact with devices 17 for application of the belt structure 4, which devices may comprise at least one feeding line 17a for example, along which the semifinished products in the form of a continuous strip are caused to move forward, said strip being then cut into sections of a length corresponding to the circumferential extension of the auxiliary drum 16, concurrently with formation of the corresponding belt layers 12a, 12b thereon. A feeding unit for supplying one or more additional reinforcing inserts may be combined with the feeding line of the belt layers 17a, which additional inserts may consist of continuous cords for example (not shown in the drawings) to be applied onto the belt layers 12a, 12b in the form of axially contiguous circumferential coils, to form the outer belting layer 12c.

Upon the action of suitable transfer devices, the belt structure 4 disposed on the auxiliary drum 16 is adapted to be picked up therefrom and transferred onto the carcass structure disposed in the form of a cylindrical sleeve on the primary drum 15. The transfer devices may for example comprise a transfer member 18 of substantially annular conformation which is conveniently moved until it is positioned around the auxiliary drum 16 to pick up the belt structure 4 therefrom. In a manner known by itself, the auxiliary drum 16 disengages the belt structure 4 which is then handled by the transfer member 18 to be disposed on the primary drum 15 carrying the carcass structure 3, at a coaxially centred position. The primary drum 15 may also be set for interacting with the transfer member 18 following movement of the primary drum itself, starting from a position at which it lends itself to interact with the devices designed to engage the carcass structure 3 thereon.

The carcass structure 3 is then shaped into a toroidal conformation, by axial movement of the annular anchoring structures 7 close to each other and simultaneous admission of fluid under pressure to the inside of said carcass, until the carcass ply or plies 10 are brought into contact with the inner surface of the belt structure 4 retained by the transfer member 18. A rolling step to be made in any convenient manner, can be carried out on the belt structure 4 after the shaping step or concurrently therewith, to obtain better adhesion of the belt layers 12a, 12b, 12c against the carcass ply or plies 10.

Upon occurrence of said engagement, the primary drum 15 together with the carcass structure 3 and belt structure 4 engaged thereon are moved towards one or more units for application of the tread band 5 and/or the sidewalls 6, starting from a position at which the primary drum interacts with the transfer member 18.

In accordance with the present invention, at least one of the steps of applying the tread band 5 and sidewalls 6 is carried out by winding up at least one continuous strip-like element of elastomer material in contiguous circumferential coils around a geometric axis of the carcass structure 3.

Preferably, both application of the tread band 5 and application of the sidewalls 6 are carried out following the above procedure, as better described in the following. However the possibility of making the sidewalls 6 in another manner is not excluded, by means of a sidewall-feeding line (not shown) for example, which is associated with the building station 13 and arranged to feed at least one semifinished product in the form of a continuous strip of elastomer material, from which the sidewalls themselves are cut into sections of predetermined length, correlated with the circumferential extension of the primary drum 15 and the tyre 2 to be obtained. The tread band 5 can be in turn directly made against the belt structure 4 formed on the auxiliary drum 16, by a feeding line supplying a semifinished product in the form of a continuous strip for example, from which the tread bands are formed by cutting operations leading to formation of sections of appropriate length.

In a preferential embodiment, the devices for application of the tread band and/or the sidewalls comprise one or more delivery members 19, 19a, 20 each arranged to lay down a respective continuous strip-like element of elastomer material on the carcass structure 3 and/or belt structure 4. Each delivery member 19, 19a, 20 may for example comprise an extruder, an applicator roller or other member that, when placed close to the tyre being processed, lends itself to deliver the continuous strip-like element of elastomer material directly against the belt structure 4 and/or carcass structure 3 borne by the primary drum 15, simultaneously with winding up of the strip-like element itself around the geometric axis of the carcass structure 3.

More particularly, at least one first delivery member 19 is provided which is part of a unit for application of the tread band 5 to the belt structure 4. The first delivery member 19 can be set to deliver a first continuous strip-like element directly against the belt structure 4, to form the tread band 5.

When for manufacture of the tread band 5 formation of a so-called substrate is required, an auxiliary delivery member 19a can be provided to directly lay down an auxiliary strip-like element against the belt structure 4 before intervention of the fist delivery member 19, in order to form the above mentioned substrate of elastomer material.

Also provided is at least one second delivery member 20, being part of a unit for application of the sidewalls 6 to the carcass ply or plies 10. The second delivery member 20 is set to deliver a second continuous strip-like element directly against the carcass ply 10, simultaneously with winding up of the strip-like element itself on the belt structure 3 borne by the primary drum 15.

An actuating assembly 21 co-operates with the delivery members 19, 19a, 20 to define the above mentioned units for application of the tread band 5 and/or the sidewalls 6. The actuating assembly 21 in fact operates on the primary drum 15 to drive it in rotation around a geometric axis thereof, so that each of the strip-like elements is circumferentially distributed on the carcass structure 3. Simultaneously, the actuating assembly 21 carries out controlled relative displacements between the primary drum 15 and delivery member 19, 19a, 20 to distribute the strip-like element in coils disposed in mutual side by side relationship to form the tread band 5 and/or the sidewall 6 in accordance with the desired thickness and geometric-conformation requirements.

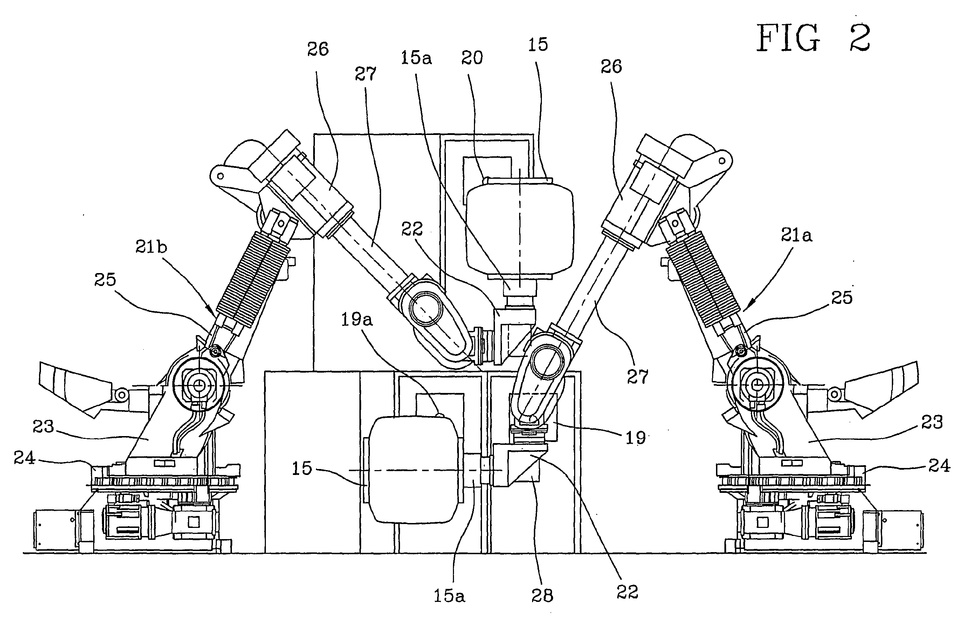

In a preferential embodiment shown in Figs. 1 and 2, the actuating assembly 21 is integrated into at least one robotized arm 21a, 21b carrying an end head 22 to which the primary drum 15 is fastened in cantilevered fashion by a shank 15a coincident with the geometric axis thereof. In the example shown (see Fig. 2) the robotized arm 21a, 21b comprises a base 23 rotating on a fixed platform 24 around a first vertical axis, a first portion 25 oscillatably connected to base 23 around a second, preferably horizontal, axis, a second portion 26 oscillatably connected to the first portion 25 around a third axis, which is preferably horizontal too, and a third portion 27 rotatably supported by the second portion 26 around an axis orthogonal to the third oscillation axis. The head 22 of the robotized arm 21a, 21b is connected at its end with the third portion 27, being allowed to oscillate around a fifth and a sixth oscillation axes that are perpendicular to each other, and rotatably carries the primary drum 15, operable in rotation by a motor 28.

The robotized arm 21a, 21b therefore is adapted to support the primary drum 15 and to control movement of same during the whole production cycle, by conveniently positioning it for the purpose of enabling interaction of same with the devices for transfer of the carcass structure 3 from the building station 13 and, subsequently, with member 18 for transfer of the belt structure 4 and by driving it in rotation in front of the delivery members 19, 19a, 20 designed to form the tread band 5 and sidewalls 6.

In more detail the robotized arm 21a, 21b after positioning of the primary drum 15 so as to enable engagement of the carcass structure 3 thereon, brings the drum itself to a position in coaxial relationship with the transfer member 18 of the belt structure 4. When engagement of the belt structure 4 on the carcass structure 3 has occurred, following shaping of the carcass structure 3 into a toroidal conformation, the robotized arm 21a, 21b takes the primary drum 15, while conveniently moving it, in front of the possible auxiliary delivery member 19a designed to make the substrate and subsequently in front of the first delivery member 19, upon the action of which formation of the tread band 5 is completed.

The primary drum 15 is then transferred to the second delivery member 20, and suitably moved in front of the latter to cause formation of one of the sidewalls 6 at a lateral position against the carcass structure 3, just as an indication starting from the annular anchoring structure 7, until close to the corresponding lateral edge of the previously-formed tread band 5. Following overturning of the primary drum 15 in front of the second delivery member 20, formation of the second sidewall 6 is started on the carcass structure 3 side opposite to the previously formed sidewall 6.

The above described operating sequence enables sidewalls 6 to be formed in such a manner that their radially external tailpieces 6a laterally overlap the side edges of the tread band 5 following a design scheme of the type usually called "overlying sidewalls".

The invention however also enables accomplishment, in an easy manner too, of sidewalls 6 following a design scheme of the type usually called "underlying sidewalls".

For the purpose, immediately after engagement of the belt structure 4 with the carcass structure 3, the primary drum 15 is transferred in front of the second delivery member 20 to cause formation of sidewalls 6 before being brought in front of the possible auxiliary delivery member 19a and the first delivery member 19 to form the tread band 5. The opposite side edges of the tread band 5 thus obtained will be superposed at the radially external tailpieces 6a of sidewalls 6.

During working, each of the delivery members 19, 19a, 20 preferably keeps a fixed positioning, while the primary drum 15 is driven in rotation and suitably moved in a transverse direction by the robotized arm 21a, 21b, so as to cause distribution of each continuous strip-like element in order to form a layer of appropriate shape and thickness upon the carcass structure 3 and/or the belt structure 4. The continuous strip-like element fed from each of the delivery members 19, 19a, 20 can advantageously have a flattened section so that it can modulate the thickness of the formed elastomer layer by varying the overlapping amount of the contiguous coils and/or orientation of the surface of the tyre being processed with respect to the cross-section outline of the strip-like element coming from the delivery member itself.

Once manufacture of the tread band 5 and sidewalls 6 has been completed, the robotized arm 21a, 21b causes a new translation of the primary drum 15 to move it away from the delivery members 19, 19a, 20 and position it in front of devices carrying out disengagement of the assembled tyre 2 from the primary drum 15.

In a preferential embodiment, apparatus 1 is set to simultaneously carry out manufacture of two tyres 2. For the purpose, as shown in Figs. 1 and 2, apparatus 1 is provided with a first and a second primary drums 15, supported by a first and a second actuating assemblies 21a, 21b respectively, to be sequentially led to interact with the devices for application of the carcass structure 3, the transfer member 18 of the belt structure 4, the unit for application of the tread band 5 and the unit for application of the sidewalls 6.

The steps of the tyre-assembling process are cyclically carried out on each of the primary drums 15 following a controlled rate. The step of disposing the carcass structure 3 on anyone of the primary drums 15 is carried out before tyre assembling on the other primary drum 15 has been completed. In this way there is no waiting period for the tyres being processed during the different process steps and therefore downtime is avoided and the risk that the same step should be carried out simultaneously on both tyres being processed is eliminated.

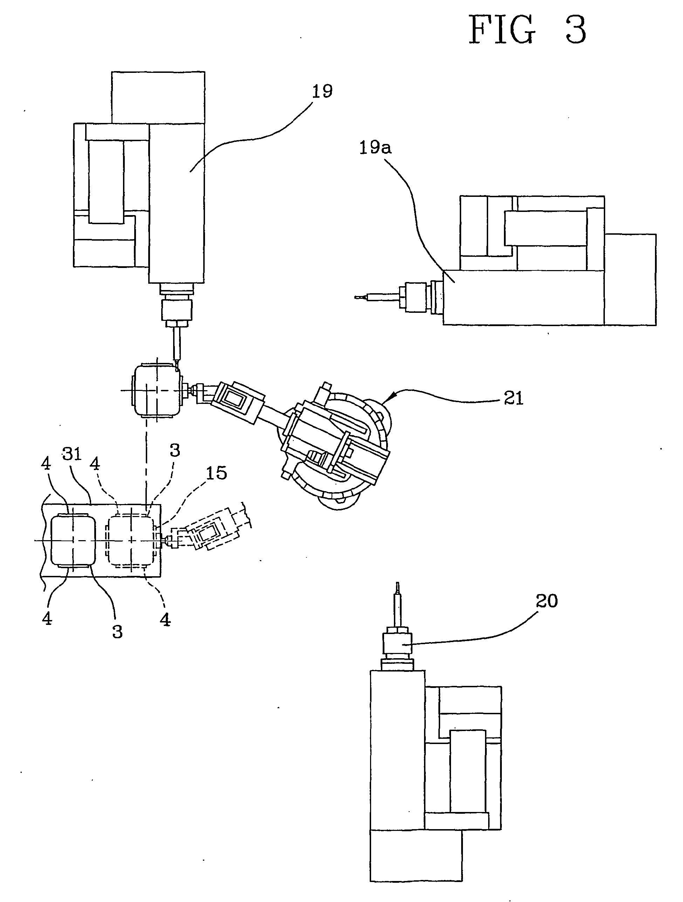

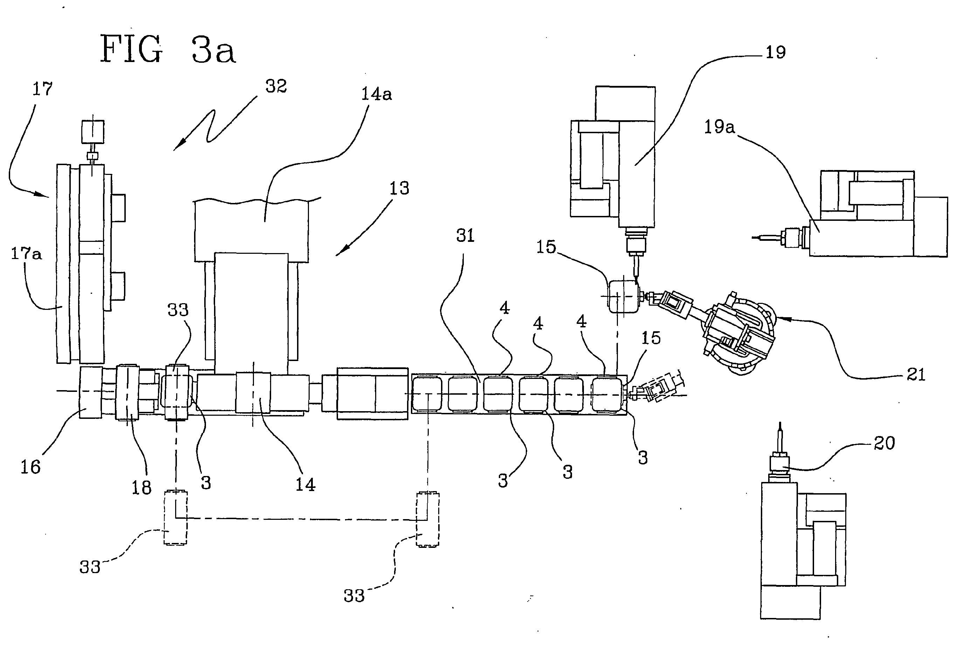

In the alternative embodiment shown in Fig. 3, the carcasses 3 coupled with the respective belts 4 are provided to be supplied to the units for application of the tread band and/or the sidewalls after storage in a magazine or on appropriate benches diagrammatically denoted by 31 in Fig. 3, to which each carcass structure 3, mounted or not on the respective primary drum 15, is transferred after engagement with the respective belt structure 4. The robotized arm 21 sequentially picks up each carcass structure 3 from the magazine or the storage benches to mount it (if required) on the primary drum 15 and submit it to the action of extruders 19, 19a, 20 intended for formation of the tread band 5 and/or sidewalls 6. In the embodiment shown a single robotized arm 21 is provided, but a pair of robotized arms can be arranged in case of need, in the same manner as described with reference to Figs. 1 and 2.

The alternative embodiment shown in Fig. 3a allows the carcass structure 3/belt structure 4 assembly to be made together, through use of a conventional assembling machine 32 integrating the building station 13 and the devices 17 for application of the belt structure 4, so as to subsequently rely on extruders 19, 19a, 20 and on the actuating assembly 21 for accomplishment of the tread band 5 and/or the sidewalls 6 following the above described modalities.

In particular, the operating sequence of the assembling machine 32 provides for the belt structure 4 made on the auxiliary drum 16 to be picked up from said drum upon the action of the transfer member 18, to be disposed at a coaxially centred position on the carcass structure 3 previously formed on the building drum 14. Through mutual approaching of the annular anchoring structures 7 by means of the building drum 14, the carcass structure 3 is shaped into a toroidal configuration and consequently coupled with the belt structure 4. An auxiliary transfer member 33 or equivalent device picks up the carcass structure 3 coupled with the belt structure 4 from the building drum 14, to lay the manufactured article onto the bench or storage magazine 31.

The robotized arm 21 or an equivalent handling member carrying the primary drum 15 will then pick up the carcass structure 3 coupled with the belt structure 4 from the bench or storage magazine 31, to submit the manufactured article to the action of extruders 19, 19a, 20 for the purpose of making the tread band 5 and/or sidewalls 6.

As an alternative to the above description, the robotized arm 21 can pick up the manufactured article directly from the auxiliary transfer member 33. In addition, the functions herein performed by the auxiliary transfer member 33 can possibly be carried out manually by an operator.

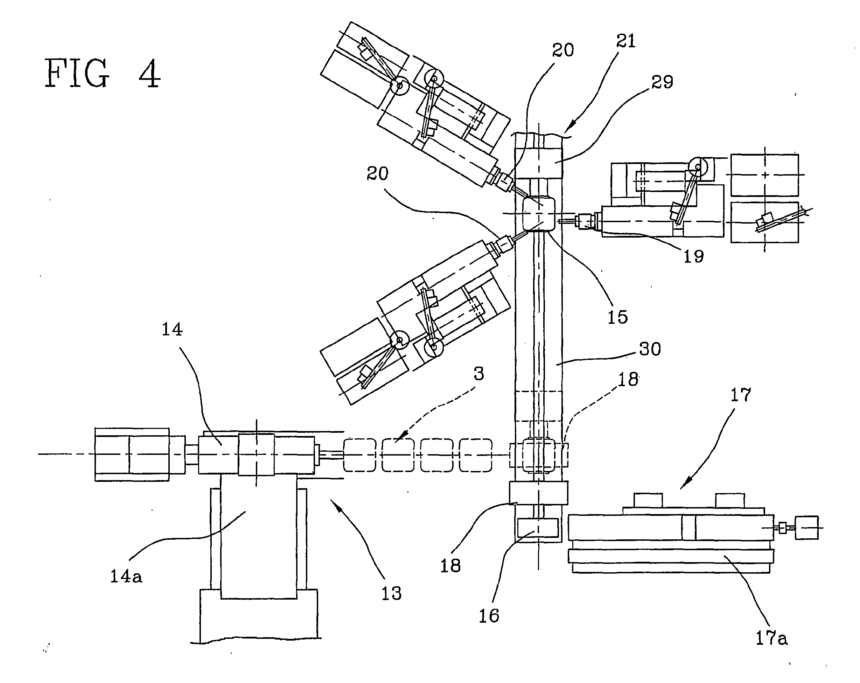

In a possible further alternative embodiment shown in Fig. 4, the actuating assembly 21 comprises a carriage 29 movable along a guide structure 30, between a first position at which, as shown in chain line, it supports the primary drum 15 in front of the application devices for the carcass structure 3, at an appropriate location for receiving the latter from the transfer members associated with the devices themselves, and a second position at which, as shown in solid line, it supports the primary drum 15 at a location close to the delivery members 19, 20. In this case the presence of at least two extruders or other delivery members 20 designed to form the sidewalls may be provided, said members being optionally radially and/or transversely movable with respect to the geometric axis of the carcass structure 3 to cause distribution of the respective strip-like elements in the form of coils disposed in radial side by side relationship against the opposite sides of the carcass structure 3 being made.

In accordance with another alternative embodiment, that can be adopted in anyone of the above described embodiments, the actuating assembly 21 may be provided to carry out translation of the delivery member or members 19, 19a, 20 transversely of the circumferential extension of the carcass structure 3 and/or belt structure 4, to cause a transverse distribution of the coils formed of the continuous strip-like element.

The present invention achieves important advantages.

Manufacture of the tread band 5 and/or sidewalls 6 by winding a continuous strip-like element into coils disposed in side by side relationship enables in fact all the limits of the known art correlated with the requirement of using complicated and bulky machinery for producing the tread bands and sidewalls by extrusion to be overcome; in fact use of this complicated and bulky machinery involves high investment and running costs only justified by a production on a large scale. The invention on the contrary enables the tread band and sidewalls to be produced with much simpler and less bulky machinery, suitable for a production adjusted in proportion to the productivity of the individual assembling apparatus 1.

Consequently, tyre-building plants currently in use and comprising a plurality of assembling apparatus interlocked with the same extrusion line for the tread band and/or sidewalls, can be advantageously adapted to the increases in productivity requested by the market, by merely adding one or more apparatus according to the invention, so as to obtain an increase in productivity meeting the market requirements.

It should be also appreciated that the present invention enables a greater evenness of the tread band and sidewalls to be achieved, which evenness in the known art was greatly conditioned by a correct distribution of the strip of elastomer material being applied, particularly at the end-to-end junction of the extremities of the strip itself. With reference to sidewall formation, it is further to be pointed out that the invention allows elimination of the critical state generated by the considerable stretching in a circumferential direction to which the strips of elastomer material applied in accordance with the known art were inevitably submitted following the step of shaping the carcass structure, above all close to the radially external end tailpieces.
In the known art, these conditions also gave rise to a great number of discarded products, the present invention, on the contrary, allowing to eliminate them.

Furthermore, the invention allows the operating flexibility of the plants to be greatly increased so as to make it possible to produce tyres the sidewalls of which are indifferently disposed in accordance with either the design scheme "overlying sidewalls" or the design scheme "underlying sidewalls" depending on requirements, and also to enable integration of the auxiliary reinforcing inserts 11 for the purpose of manufacturing self-supporting tyres without any substantial modification to the plant being required to this aim.

In addition, further advantages from a qualitative point of view have repercussions on traditional extrusion lines when the apparatus in reference is used in combination with other apparatus interlocked with an extrusion line of known type. For example, combination of the concerned apparatus with a known plant provided with one or more traditional extrusion lines makes it possible to reduce productivity of the extrusion lines when it is necessary to carry out working of particular blends and materials that, due to process requirements, cannot be extruded at high speed, without on the other hand impairing the overall productivity of the plant. In addition, the extrusion lines can be advantageously utilised with an appropriate margin from their maximum productivity limit, under such conditions that more guarantees in terms of constancy in the quality of the obtained product are obtained.

## Claims

1. A method of assembling tyres for vehicle wheels, comprising the steps of:
- assembling a carcass structure (3) comprising at least one carcass ply (10) in engagement with annular anchoring structures (7) axially spaced apart from each other;
- disposing a belt structure (4) comprising at least one belt layer (12a, 12b, 12c), on an auxiliary drum (16);
- picking up the belt structure (4) from the auxiliary drum (16) to transfer it to a position coaxially centred with respect to the carcass structure (3);
- shaping the carcass structure (3) according to a toroidal configuration for engagement of the belt structure (4) with the carcass structure (3) ;
- applying a tread band (5) to the belt structure (4);
- applying a pair of sidewalls (6) to the carcass structure (3) on opposite sides thereof;
wherein at least one of said steps of applying a tread band (5) and applying a pair of sidewalls (6) is carried out by winding up at least one continuous strip-like element of elastomer material in contiguous circumferential coils around the carcass structure (3), arranged on a primary drum (15),
wherein said steps of applying a tread band (5) and applying a pair of sidewalls (6), are cyclically carried out following a controlled rate on at least one first and one second primary drums (15), a step of arranging the carcass structure (3) on one of the primary drums (15) being carried out before completing assembling of a tyre on the other of the primary drums (15).

2. A method as claimed in claim 1, wherein application of the tread band (5) is carried out by winding at least one first continuous strip-like element of elastomer material, in the form of contiguous circumferential coils, around the belt structure (4).

3. A method as claimed in claim 1, wherein application of each sidewall (6) is carried out by winding at least one second continuous strip-like element of elastomer material in contiguous circumferential coils, around the carcass structure (3).

4. A method as claimed in claim 1, wherein application of the sidewalls (6) is carried out after the carcass structure (3) has been shaped into a toroidal configuration.

5. A method as claimed in claim 1, wherein application of the sidewalls (6) is carried out after application of the tread band (5).

6. A method as claimed in claim 1, wherein application of the sidewalls (6) is carried out before application of the tread band (5).

7. A method as claimed in claim 1, wherein the continuous strip-like element is fed from a delivery member (19, 19a, 20) placed at a region close to the tyre (2) being processed, simultaneously with winding up of the strip-like element itself around the geometric axis of the carcass structure (3).

8. A method as claimed in claim 7, wherein feeding of the continuous strip-like element is carried out by extrusion through said delivery member (19, 19a, 20).

9. A method as claimed in claim 7, wherein concurrently with application of the continuous strip-like element, the following steps are carried out:
- giving the primary drum (15) a circumferential-distribution rotatory motion around a geometric rotation axis thereof, so that the continuous strip-like element is circumferentially distributed around the geometric axis of the carcass structure (3);
- carrying out controlled relative transverse-distribution displacements between the primary drum (15) and delivery member (19, 19a, 20) so as to form with said strip-like element a plurality of coils disposed in mutual side by side relationship.

10. A method as claimed in claim 9, wherein said transverse-distribution displacements are carried out by movement of the primary drum (15).

11. A method as claimed in claim 9, wherein driving in rotation and movement of the primary drum (15) are carried out by an actuating assembly (21a, 21b, 29) engaging the primary drum itself.

12. A method as claimed in claim 1, wherein after transfer of the belt structure (4) and before carrying out application of the continuous strip-like element, the step of moving the primary drum (15) towards the delivery member (19, 19a, 20) is carried out, starting from a position at which the primary drum (15) interacts with a transfer member (18) shifting the belt structure (4) onto the carcass structure (3).

13. A method as claimed in claim 7, further comprising the step of moving the primary drum (15) away from said delivery member (1.9, 19a, 20) to position it in front of devices for disengaging the tyre (2) from the primary drum (15).

14. A method as claimed in claim 1, further comprising the step of transferring the primary drum (15) to a region between at least one first delivery member (19, 19a) intended for application of the tread band (5) and at least one second delivery member (20) intended for manufacture of the sidewalls (6).

15. A method as claimed in claim 1, wherein the step of assembling the carcass structure (3) comprises the steps of:
- forming the carcass structure (3) on a building drum (14);
- transferring the carcass structure (3) from the building drum (14) to anyone of said first and second primary drums (15).

16. A method as claimed in claim 15, wherein transfer of the carcass structure,(3) from the building drum (14) to anyone of said first and second primary drums (15) is carried out subsequently to engagement of the belt structure (4) with the carcass structure (3).

17. A method as claimed in claim 15, wherein formation of the carcass structure (3) comprises the step of associating auxiliary inserts for elastic support (11) with said at least one carcass ply (10), each of said auxiliary inserts showing a radially internal edge (11a) disposed close to one of the annular anchoring structures (7) and a radially external edge (11b) disposed close to a side edge of the belt structure (4).

18. A method as claimed in claim 1, further comprising at least one rolling step carried out on the belt structure (4) applied to the carcass structure (3) .

19. A method as claimed in claim 1, wherein before at least one of said application steps, a step of storing carcass structures (3) in engagement with respective belt structures (4) is carried out.

20. An apparatus for assembling tyres for vehicle wheels comprising:
- at least one primary drum (15) arranged to support a carcass structure (3) comprising at least one carcass ply (10) in engagement with anchoring structures (7) axially spaced apart from each other;
- an auxiliary drum (16) set to carry a belt structure (4);
- a transfer member (18) to move the belt structure (4) from the auxiliary drum (16) to the carcass structure (3);
- at least one unit (19, 19a) for application of a tread band (3) onto the belt structure (4);
- at least one unit (20) for application of a pair of sidewalls (6) against the opposite lateral walls of the carcass structure (3);
wherein at least one of said tread band (5) and sidewall (6) application units comprises at least one delivery member (19, 19a, 20) to lay down at least one continuous strip-like element of elastomer material in contiguous circumferential coils on said carcass structure (3),
**characterized in that** it further comprises at least one second primary drum (15), wherein said first and second primary drums are engaged by a first and a second actuating assemblies (21a, 21b) respectively, to, be sequentially led to interact with said devices for application of the carcass structure (3), with the unit for application of the tread band (5) and the unit for application of the sidewalls (6).

21. An apparatus as claimed in claim 20, wherein said delivery member (19, 19a, 20) comprises at least one extruder.

22. An apparatus as claimed in claim 20, wherein associated with said at least one delivery member (19, 19a, 20) is at least one actuating assembly (21a, 21b, 29) set to drive anyone of said first and second primary drums (15) in rotation around a geometric axis thereof, so that said strip-like element is circumferentially distributed on the belt structure (4), and to cause controlled relative displacements between the primary drum (15) and said at least one delivery member (19, 19a, 20) for distribution of said strip-like element so as to form said coils disposed in mutual side by side relationship.

23. An apparatus as claimed in claim 22, wherein said actuating assembly (21a, 21b, 29) operates on anyone of said first and second primary drums (15) to move it relative to the delivery member (19, 19a, 20).

24. An apparatus as claimed in claim 23, wherein said actuating assembly (21a, 21b) is integrated into a robotized arm engaging anyone of said first and second primary drums (15).

25. An apparatus as claimed in claim 23, wherein the actuating assembly (29) comprises a carriage movable along a guide structure (30) between a first position at which it supports anyone of said first and second primary drums (15) at a location in front of application devices (13) of the carcass structure (3), and a second position at which it supports anyone of said first and second primary drums (15) at a location in front of said at least one delivery member (19, 19a, 20) .

26. An apparatus as claimed in claim 20, further comprising devices (13) for application of the carcass structure (3) on anyone of said first and second primary drums (15), wherein said actuating assembly (21a, 21b, 29) is arranged to cause translation of the primary drum (15) towards said at least one delivery member (19, 19a, 20) starting from a position at which anyone of said first and second primary drums (15) interacts with the devices (13) for application of the carcass structure (3).

27. An apparatus as claimed in claim 20, comprising at least one first delivery member (19, 19a) designed to form the tread band (5), and at least one second delivery member (20) designed to form the sidewalls (6).

28. An apparatus as claimed in claim 20, further comprising:
a building station (13) for formation of the carcass structure (3) on a building drum (14);
- transfer devices (31, 33) to transfer the carcass structure (3) from the building drum (14) to anyone of said first and second primary drums (15).

29. An apparatus as claimed in claim 28, wherein said transfer devices comprise a storage magazine (31) and an auxiliary transfer member (33) to transfer the carcass structure (3) from the building drum (14) to the storage magazine (31).

30. An apparatus as claimed in claim 20, comprising devices for associating auxiliary elastic-support inserts with said at least one carcass ply (10), each of said auxiliary inserts having a radially internal edge (11a) disposed close to one of the annular anchoring structures (7) and a radially external edge (11b) disposed close to a side edge of the belt structure (4).

## Patentansprüche

1. Verfahren zum Zusammenbauen von Reifen für Fahrzeugräder, wobei das Verfahren die Schritte aufweist:
- Zusammenfügen eines Karkassenaufbaus (3), der wenigstens eine Karkassenlage (10) aufweist, die in Eingriff mit ringförmigen Verankerungsaufbauten (7) steht, die axial im Abstand voneinander angeordnet sind,
- Anordnen eines Gurtaufbaus (4), der wenigstens eine Gurtlage (12a, 12b, 12c) hat, auf einer Zusatztrommel (16),
- Aufnahme des Gurtaufbaus (4) von der Zusatztrommel (16) zu seiner Überführung in eine bezüglich des Karkassenaufbaus (3) koaxial zentrierte Position,
- Bringen des Karkassenaufbaus (3) in eine Torusform für den Eingriff des Gurtaufbaus (4) mit dem Karkassenaufbau (3),
- Aufbringen eines Laufflächenbandes (5) auf den Gurtaufbau (4),
- Aufbringen eines Paars von Seitenwänden (6) an den Karkassenaufbau (3) auf seinen gegenüberliegenden Seiten,
- wobei wenigstens einer der Schritte des Aufbringens eines Laufflächenbandes (5) und des Aufbringens eines Paars von Seitenwänden (6) **dadurch** ausgeführt wird, dass wenigstens ein fortlaufendes streifenförmiges Element aus elastomerem Material in benachbarten Umfangswindungen um den Karkassenaufbau (3) herum gewickelt wird, der auf einer Haupttrommel (15) angeordnet ist,
- wobei die Schritte des Aufbringens des Laufflächenbandes (5) und des Auf bringens eines Paars von Seitenwänden (6) auf wenigstens einer ersten und einer zweiten Haupttrommel (15) mit einer gesteuerten Geschwindigkeit zyklisch ausgeführt wird und
- wobei ein Schritt des Anordnens des Karkassenaufbaus (3) auf einer der Haupttrommeln (15) ausgeführt wird, bevor das Zusammenbauen eines Reifens auf der anderen der Haupttrommeln (15) abgeschlossen wird.

2. Verfahren nach Anspruch 1, bei welchem das Aufbringen des Laufflächenbandes (5) **dadurch** ausgeführt wird, dass wenigstens ein erstes fortlaufendes streifenförmiges Element aus elastomerem Material in Form von benachbarten Umfangswindungen um den Gurtaufbau (4) herum gelegt wird.

3. Verfahren nach Anspruch 1, bei welchem das Aufbringen jeder Seitenwand (6) **dadurch** ausgeführt wird, dass wenigstens ein zweites fortlaufendes streifenförmiges Element aus elastomerem Material in fortlaufende Umfangswindungen um den Karkassenaufbau (3) herum gelegt wird.

4. Verfahren nach Anspruch 1, bei welchem das Anlegen der Seitenwände (6) ausgeführt wird, nachdem der Karkassenaufbau (3) in eine Torusform gebracht worden ist.

5. Verfahren nach Anspruch 1, bei welchem das Anlegen der Seitenwände (6) nach dem Aufbringen des Laufflächenbandes (5) ausgeführt wird.

6. Verfahren nach Anspruch 1, bei welchem das Aufbringen der Seitenwände (6) vor dem Aufbringen des Laufflächenbandes (5) ausgeführt wird.

7. Verfahren nach Anspruch 1, bei welchem das fortlaufende streifenförmige Element von einem in einem Bereich in der Nähe des in Bearbeitung befindlichen Reifens (2) angeordneten Abgabeelement (19, 19a, 20) gleichzeitig zum Herumwickeln des streifenförmigen Elements um die geometrische Achse des Karkassenaufbaus (3) herum zugeführt wird.

8. Verfahren nach Anspruch 7, bei welchem das Zuführen des fortlaufenden streifenförmigen Elements durch Extrusion durch das Abgabeelement (19, 19a, 20) ausgeführt wird.

9. Verfahren nach Anspruch 7, bei welchem gleichzeitig zum Aufbringen des fortlaufenden streifenförmigen Elements die folgenden Schritte ausgeführt werden:
- Versetzen der Haupttrommel (15) in eine Umfangsverteilungs-Drehbewegung um eine geometrische Drehachse von ihr, so dass das fortlaufende streifenförmige Element im Umfang um die geometrische Achse des Karkassenaufbaus (3) herum verteilt wird, und
- Ausführen von gesteuerten relativen Querverteilungsverschiebungen zwischen der Haupttrommel (15) und dem Abgabeelement (19, 19a, 20), um so mit dem streifenförmigen Element eine Vielzahl von Windungen zu bilden, die in einer gegenseitigen Beziehung Seite an Seite angeordnet sind.

10. Verfahren nach Anspruch 9, bei welchem die Querverteilungsverschiebungen durch Bewegung der Haupttrommel (15) ausgeführt werden.

11. Verfahren nach Anspruch 9, bei welchem das in Drehung Versetzen und die Bewegung der Haupttrommel (15) von einer Betätigungsanordnung (21 a, 21 b, 29) ausgeführt werden, die an der Haupttrommel angreift.

12. Verfahren nach Anspruch 1, bei welchem nach der Überführung des Gurtaufbaus (4) und vor dem Ausführen des Aufbringens des fortlaufenden streifenförmigen Elements der Schritt ausgeführt wird, die Haupttrommel (15) zu dem Abgabeelement (19, 19a, 20) ausgehend von einer Position zu bewegen, in welcher die Haupttrommel (15) mit dem Überführungselement (18) für ein Schieben des Gurtaufbaus (4) auf den Karkassenaufbau (3) zusammenwirkt.

13. Verfahren nach Anspruch 7, welches weiterhin den Schritt aufweist, die Haupttrommel (15) von dem Abgabeelement (19, 19a, 20) wegzubewegen, um sie vor den Vorrichtungen für die Eingriffslösung des Reifens (2) von der Haupttrommel (15) zu positionieren.

14. Verfahren nach Anspruch 1, welches weiterhin den Schritt aufweist, die Haupttrommel (15) zu einem Bereich zwischen wenigstens einem erstem Abgabeelement (19, 19a) für das Aufbringen des Laufflächenbandes (5) und wenigstens einem zweiten Abgabeelement (20) für die Herstellung der Seitenwände (6) zu überführen.

15. Verfahren nach Anspruch 1 bei welchem der Schritt des Zusammenfügens des Karkassenaufbaus (3) die Schritte aufweist:
- Ausbilden des Karkassenaufbaus (3) auf einer Aufbautrommel (14) und
- Überführen des Karkassenaufbaus (3) von der Aufbautrommel (14) zur ersten oder zweiten Haupttrommel (15).

16. Verfahren nach Anspruch 15, bei welchem die Überführung des Karkassenaufbaus (3) von der Aufbautrommel (14) zur ersten oder zweiten Haupttrommel (15) nach dem in Eingriff Bringen des Gurtaufbaus (4) mit dem Karkassenaufbau (3) ausgeführt wird.

17. Verfahren nach Anspruch 15, bei welchem die Ausbildung des Karkassenaufbaus (3) den Schritt aufweist, zusätzliche Einlagen (11) zur elastischen Abstützung der wenigstens einen Karkassenlage (10) zuzuordnen, wobei jede der zusätzlichen Einlagen einen radial inneren Rand (11a), der nahe an einem der ringförmigen Verankerungsaufbauten (7) angeordnet ist, und einen radial äußeren Rand (11 b) aufweist, der nahe an dem Seitenrand des Gurtaufbaus (4) angeordnet ist.

18. Verfahren nach Anspruch 1, welches weiterhin wenigstens einen Walzschritt aufweist, der auf dem Gurtaufbau (4) ausgeführt wird, der auf den Karkassenaufbau (3) aufgebracht ist.

19. Verfahren nach Anspruch 1, bei welchem vor wenigstens einem der Aufbringschritte ein Schritt ausgeführt wird, den Karkassenaufbau (3) in Eingriff mit den entsprechenden Gurtaufbauten (4) zu lagern.

20. Vorrichtung zum Zusammenfügen von Reifen für Fahrzeugräder
- mit wenigstens einer Haupttrommel (15), die für das Halten eines Karkassenaufbaus (3) angeordnet ist, der wenigstens eine Karkassenlage (10) aufweist, die in Eingriff mit Verankerungsaufbauten (7) steht, die axial voneinander beabstandet sind,
- mit einer Zusatztrommel (16), die so vorgesehen ist, dass sie einen Gurtaufbau (4) trägt,
- mit einem Überführungselement (18) zum Bewegen des Gurtaufbaus (4) von der Zusatztrommel (16) zu dem Karkassenaufbau (3),
- mit wenigstens einer Einheit (19, 19a) zum Aufbringen eines Laufflächenbandes (3) auf dem Gurtaufbau (4), und
- mit wenigstens einer Einheit (20) zum Aufbringen eines Paars von Seitenwänden (6) an den gegenüberliegenden Seitenwänden des Karkassenaufbaus (3),
- wobei wenigstens eine der Aufbringeinheiten für das Laufflächenband (5) und die Seitenwand (6) wenigstens ein Abgabeelement (19, 19a, 20) aufweist, um wenigstens ein fortlaufendes streifenförmiges Element aus elastomerem Material in benachbarten Umfangswindungen auf dem Karkassenaufbau (3) abzulegen,
**dadurch gekennzeichnet,**
- **dass** sie weiterhin wenigstens eine zweite Haupttrommel (15) aufweist,
- wobei die erste und die zweite Haupttrommel mit einer ersten bzw. zweiten Betätigungsanordnung (21 a, 21 b) in Eingriff stehen, damit sie nacheinander zu einem Zusammenwirken mit den Einrichtungen zum Aufbringen des Karkassenaufbaus (3), mit der Einheit zum Aufbringen des Laufflächenbandes (5) und mit der Einheit zum Anbringen der Seitenwände (6) geführt werden.

21. Vorrichtung nach Anspruch 20, bei welcher das Abgabeelement (19, 19a, 20) wenigstens einen Extruder aufweist.

22. Vorrichtung nach Anspruch 20, bei welcher dem wenigstens einen Abgabeelement (19, 19a, 20) wenigstens eine Betätigungsanordnung (21a, 21b, 29) zugeordnet ist, die für ein solches in Drehung Versetzen der ersten oder zweiten Haupttrommel (15) um eine geometrische Achse von ihr, dass das streifenförmige Element am Umfang auf dem Gurtaufbau (4) verteilt wird, und zur Herbeiführung von gesteuerten Relativverschiebungen zwischen der Haupttrommel (15) und dem wenigstens einen Abgabeelement (19, 19a, 20) für ein solches Verteilen des streifenförmigen Elements eingestellt ist, dass die Windungen gebildet werden, die in einer gegenseitigen Beziehung Seite an Seite angeordnet sind.

23. Vorrichtung nach Anspruch 22, bei welcher die Betätigungsanordnung (2 1 a, 2 1 b, 29) auf die erste oder zweite Haupttrommel (15) so einwirkt, dass sie relativ zum Abgabeelement (19, 19a, 20) bewegt wird.

24. Vorrichtung nach Anspruch 23, bei welcher die Betätigungsanordnung (21 a, 2 1 b) in einen robotisierten Arm integriert ist, der an der ersten oder zweiten Haupttrommel (15) angreift.

25. Vorrichtung nach Anspruch 23, bei welcher die Betätigungsanordnung (29) einen Wagen aufweist, der längs eines Führungsaufbaus (30) zwischen einer ersten Position, an welcher er die erste oder zweite Haupttrommel (15) an einer Stelle vor den Aufbringeinrichtungen (13) des Karkassenaufbaus (3) hält, und einer zweiten Position bewegbar ist, an welcher er die erste oder zweite Haupttrommel (15) an einer Stelle vor dem wenigstens einen Abgabeelement (19, 19a, 20) hält.

26. Vorrichtung nach Anspruch 20, welche weiterhin Einrichtungen (13) zum Aufbringen des Karkassenaufbaus (3) auf die erste oder zweite Haupttrommel (15) aufweist, wobei die Betätigungsanordnung (21a, 21b, 29) so angeordnet ist, dass eine Verschiebung der Haupttrommel (15) zu dem wenigstens einen Abgabeelement (19, 19a, 20) ausgehend von einer Position herbeigeführt wird, an der die erste oder zweite Haupttrommel (15) mit den Einrichtungen (13) zum Aufbringen des Karkassenaufbaus (3) zusammenwirkt.

27. Vorrichtung nach Anspruch 20 mit wenigstens einem ersten Abgabeelement (19, 19a), das zur Bildung des Laufflächenbandes (5) ausgelegt ist, und mit wenigstens einem zweiten Abgabeelement (20), das zur Bildung der Seitenwände (6) ausgelegt ist.

28. Vorrichtung nach Anspruch 20, welche weiterhin
- eine Aufbaustation (13) zur Ausbildung des Karkassenaufbaus (3) auf einer Aufbautrommel (14) und
- Überführungseinrichtungen (31, 33) aufweist, um den Karkassenaufbau (3) von der Aufbautrommel (14) zur ersten oder zweiten Haupttrommel (15) zu überführen.

29. Vorrichtung nach Anspruch 28, bei welcher die Überführungseinrichtungen ein Lagermagazin (31) und ein zusätzliches Überführungselement (33) aufweisen, um den Karkassenaufbau (3) von der Aufbautrommel (14) zum Lagermagazin (31) zu überführen.

30. Vorrichtung nach Anspruch 20 mit Einrichtungen, um der wenigstens einen Karkassenlage (10) zusätzliche Elastikstützeinlagen zuzuordnen, von denen jede einen radial inneren Rand (11a), der nahe an einem der ringförmigen Verankerungsaufbauten (7) angeordnet ist, und einen radial äußeren Rand (11b) hat, der nahe an einem Seitenrand des Gurtaufbaus (4) angeordnet ist.

## Revendications

1. Procédé d'assemblage de pneus pour roues de véhicule, comprenant les étapes consistant à :
- assembler une structure de carcasse (3) comprenant au moins une nappe de carcasse (10) en contact avec des structures d'ancrage annulaires (7) espacées axialement les unes des autres ;
- disposer une structure de ceinture (4) comprenant au moins une couche de ceinture (12a, 12b, 12c) sur un tambour auxiliaire (16) ;
- enlever la structure de ceinture (4) du tambour auxiliaire (16) pour la transférer vers une position centrée de façon coaxiale par rapport à la structure de carcasse (3) ;
- mettre en forme la structure de carcasse (3) selon une configuration toroïdale pour mettre en contact la structure de ceinture (4) avec la structure de carcasse (3) ;
- appliquer une bande de roulement (5) sur la structure de ceinture (4) ;
- appliquer une paire de flancs (6) sur la structure de carcasse (3) sur ses côtés opposés ;
dans lequel au moins l'une desdites étapes d'application d'une bande de roulement (5) et d'application d'une paire de flancs (6) est exécutée en enroulant au moins un élément continu en bande en matériau élastomère en spires périphériques contiguës autour de la structure de carcasse (3) disposée sur un tambour primaire (15),
dans lequel lesdites étapes d'application d'une bande de roulement (5) et d'application d'une paire de flancs (6) sont exécutées de manière cyclique suivant une vitesse régulée sur au moins un premier et un deuxième tambours primaires (15), une étape de mise en place de la structure de carcasse (3) sur l'un des tambours primaires (15) étant exécutée avant d'achever l'assemblage d'un pneu sur l'autre des tambours primaires (15).

2. Procédé selon la revendication 1, dans lequel l'application de la bande de roulement (5) est exécutée en enroulant au moins un premier élément continu en bande en matériau élastomère, sous la forme de spires périphériques contiguës, autour de la structure de ceinture (4).

3. Procédé selon la revendication 1, dans lequel l'application de chaque flanc (6) est exécutée en enroulant au moins un deuxième élément continu en bande en matériau élastomère en spires périphériques contiguës, autour de la structure de carcasse (3).

4. Procédé selon la revendication 1, dans lequel l'application des flancs (6) est exécutée après que la structure de carcasse (3) a été mise en forme selon une configuration toroïdale.

5. Procédé selon la revendication 1, dans lequel l'application des flancs (6) est exécutée après l'application de la bande de roulement (5).

6. Procédé selon la revendication 1, dans lequel l'application des flancs (6) est exécutée avant l'application de la bande de roulement (5).

7. Procédé selon la revendication 1, dans lequel l'élément continu en bande est fourni par un élément de distribution (19, 19a, 20) placé dans une région proche du pneu (2) traité, simultanément à l'enroulement de l'élément en bande autour de l'axe géométrique de la structure de carcasse (3).

8. Procédé selon la revendication 7, dans lequel l'alimentation de l'élément continu en bande est exécutée par extrusion à travers ledit élément de distribution (19, 19a, 20).

9. Procédé selon, la revendication 7, dans lequel, simultanément à l'application de l'élément continu en bande, les étapes suivantes sont exécutées :
- imprimer au tambour primaire (15) un mouvement rotatif de distribution périphérique autour d'un axe de rotation géométrique de celui-ci, de sorte que l'élément continu en bande est réparti dans le sens périphérique autour de l'axe géométrique de la structure de carcasse (3) ;
- provoquer des déplacements de distribution transversale relative contrôlés entre le tambour primaire (15) et l'élément de distribution (19, 19a, 20) afin de former avec ledit élément en bande une pluralité de spires disposées côte à côte.

10. Procédé selon la revendication 9, dans lequel lesdits déplacements de distribution transversale sont exécutés par le mouvement du tambour primaire (15).

11. Procédé selon la revendication 9, dans lequel l'entraînement en rotation et le mouvement du tambour primaire (15) sont effectués par un ensemble d'actionnement (21a, 21b, 29) qui est en contact avec le tambour primaire lui-même.

12. Procédé selon la revendication 1, dans lequel après le transfert de la structure de ceinture (4) et avant la mise en oeuvre de l'application de l'élément continu en bande, l'étape de déplacement du tambour primaire (15) vers l'élément de distribution (19, 19a, 20) est exécutée, en partant d'une position dans laquelle le tambour primaire (15) interagit avec un élément de transfert (18) qui décale la structure de ceinture (4) sur la structure de carcasse (3).

13. Procédé selon la revendication 7, comprenant en outre l'étape consistant à éloigner le tambour primaire (15) dudit élément de distribution (19, 19a, 20) pour le positionner devant des appareils servant à dégager le pneu (2) du tambour primaire (15).

14. Procédé selon la revendication 1, comprenant en outre l'étape consistant à transférer le tambour primaire (15) vers une région située entre au moins un premier élément de distribution (19, 19a) destiné à l'application de la bande de roulement (5) et au moins un deuxième élément de distribution (20) destiné à la fabrication des flancs (6).

15. Procédé selon la revendication 1, dans lequel l'étape d'assemblage de la structure de carcasse (3) comprend les étapes consistant à :
- former la structure de carcasse (3) sur un tambour de formation (14) ;
- transférer la structure de carcasse (3) du tambour de formation (14) à l'un ou l'autre desdits premier et deuxième tambours primaires (15).

16. Procédé selon la revendication 15, dans lequel le transfert de la structure de carcasse (3) du tambour de formation (14) à l'un ou l'autre desdits premier et deuxième tambours primaires (15) est effectué suite à la mise en contact de la structure de ceinture (4) avec la structure de carcasse (3).

17. Procédé selon la revendication 15, dans lequel la formation de la structure de carcasse (3) comprend l'étape consistant à associer des inserts auxiliaires pour un support élastique (11) avec ladite au moins une nappe de carcasse (10), chacun desdits inserts auxiliaires montrant un bord radialement intérieur (11a) disposé à proximité de l'une des structures d'ancrage annulaires (7) et un bord radialement extérieur (11b) disposé à proximité d'un bord latéral de la structure de ceinture (4).

18. Procédé selon la revendication 1, comprenant en outre au moins une étape de roulage exécutée sur la structure de ceinture (4) appliquée à la structure de carcasse (3).

19. Procédé selon la revendication 1, dans lequel avant au moins l'une des étapes d'application, une étape de maintien des structures de carcasse (3) en contact avec les structures de ceinture respectives (4) est exécutée.

20. Dispositif pour assembler des pneus pour roues de véhicule comprenant :
- au moins un tambour primaire (15) adapté pour supporter une structure de carcasse (3) comprenant au moins une nappe de carcasse (10) en contact avec des structures d'ancrage (7) espacées axialement les unes des autres ;
- un tambour auxiliaire (16) prévu pour porter une structure de ceinture (4) ;
- un élément de transfert (18) pour déplacer la structure de ceinture (4) du tambour auxiliaire (16) à la structure de carcasse (3) ;
- au moins une unité (19, 19a) pour l'application d'une bande de roulement (3) sur la structure de ceinture (4) ;
- au moins une unité (20) pour l'application d'une paire de flancs (6) contre les parois latérales opposées de la structure de carcasse (3) ;
dans lequel au moins l'une desdites unités d'application de bande de roulement (5) et de flancs (6) comprend au moins un élément de distribution (19, 19a, 20) pour déposer au moins un élément continu en bande en matériau élastomère en spires périphériques contiguës sur ladite structure de carcasse (3),
**caractérisé en ce qu'**il comprend en outre au moins un deuxième tambour primaire (15), lesdits premier et deuxième tambours primaires entrant au contact respectivement d'un premier et d'un deuxième ensemble d'actionnement (21a, 21b) pour être amenés en séquence à interagir avec lesdits dispositifs pour l'application de la structure de carcasse (3), avec l'unité pour l'application de la bande de roulement (5) et l'unité pour l'application des flancs (6).

21. Dispositif selon la revendication 20, dans lequel ledit élément de distribution (19, 19a, 20) comprend au moins une extrudeuse.

22. Dispositif selon la revendication 20, dans lequel est associé audit au moins un élément de distribution (19, 19a, 20) au moins un ensemble d'actionnement (21a, 21b, 29) prévu pour entraîner l'un ou l'autre desdits premier et deuxième tambours primaires (15) en rotation autour d'un axe géométrique de celui-ci, de telle manière que ledit élément en bande est réparti dans le sens de la périphérie sur la structure de ceinture (4), et pour provoquer des déplacements relatifs contrôlés entre le tambour primaire (15) et ledit au moins un élément de distribution (19, 19a, 20) pour la distribution dudit élément en bande afin de former lesdites spires disposées côte à côte.

23. Dispositif selon la revendication 22, dans lequel ledit ensemble d'actionnement (21a, 21b, 29) agit sur l'un ou l'autre desdits premier et deuxième tambours primaires (15) pour le déplacer par rapport à l'élément de distribution (19, 19a, 20).

24. Dispositif selon la revendication 23, dans lequel ledit ensemble d'actionnement (21 a, 21b) est intégré à un bras robotisé qui entre en contact avec l'un ou l'autre desdits premier et deuxième tambours primaires (15).

25. Dispositif selon la revendication 23, dans lequel l'ensemble d'actionnement (29) comprend un chariot mobile le long d'une structure de guidage (30) entre une première position dans laquelle il supporte l'un ou l'autre desdits premier et deuxième tambours primaires (15) en un endroit situé devant des dispositifs d'application (13) de la structure de carcasse (3), et une deuxième position dans laquelle il supporte l'un ou l'autre desdits premier et deuxième tambours primaires (15) en un endroit situé devant ledit au moins un élément de distribution (19, 19a, 20).

26. Dispositif selon la revendication 20, comprenant en outre des dispositifs (13) pour l'application de la structure de carcasse (3) sur l'un ou l'autre desdits premier et deuxième tambours primaires (15), ledit ensemble d'actionnement (21a, 21b, 29) étant prévu pour provoquer la translation du tambour primaire (15) vers ledit au moins un élément de distribution (19, 19a, 20) en partant d'une position dans laquelle l'un ou l'autre desdits premier et deuxième tambours primaires (15) interagit avec les dispositifs (13) pour l'application de la structure de carcasse (3).

27. Dispositif selon la revendication 20, comprenant au moins un premier élément de distribution (19, 19a) conçu pour former la bande de roulement (5), et au moins un deuxième élément de distribution (20) conçu pour former les flancs (6).

28. Dispositif selon la revendication 20, comprenant en outre :
- une station de formation (13) pour la formation de la structure de carcasse (3) sur un tambour de formation (14) ;
- des dispositifs de transfert (31, 33) pour transférer la structure de carcasse (3) du tambour de formation (14) à l'un ou l'autre desdits premier et deuxième tambours primaires (15).

29. Dispositif selon la revendication 28, dans lequel lesdits dispositifs de transfert comprennent un magasin de stockage (31) et un élément de transfert auxiliaire (33) pour transférer la structure de carcasse (3) du tambour de formation (14) au magasin de stockage (31).

30. Dispositif selon la revendication 20, comprenant des dispositifs pour associer des inserts de support élastique auxiliaires à ladite au moins une nappe de carcasse (10), chacun desdits inserts auxiliaires ayant un bord radialement intérieur (11a) placé à proximité de l'une des structures d'ancrage annulaires (7) et un bord radialement extérieur (11b) placé à proximité d'un bord latéral de la structure de ceinture (4).
